(19) Europäisches Patentamt
European Patent Office
Office européen des brevets

(11) Veröffentlichungsnummer : **0 454 656 A2**

# (12) EUROPÄISCHE PATENTANMELDUNG

(21) Anmeldenummer : **91890057.2**

(51) Int. Cl.$^5$ : **G01B 21/22**

(22) Anmeldetag : **25.03.91**

(30) Priorität : **29.03.90 AT 734/90**

(43) Veröffentlichungstag der Anmeldung :
**30.10.91 Patentblatt 91/44**

(84) Benannte Vertragsstaaten :
**CH DE FR GB IT LI SE**

(71) Anmelder : **Österreichisches Forschungszentrum Seibersdorf Ges.m.b.H.**
**Kramergasse 1**
**A-1010 Wien (AT)**

(72) Erfinder : **Wallisch, Karl**
**Kinzerplatz 16/3**
**A-1201 Wien (AT)**
Erfinder : **Schabauer, Harald, Dipl.-Ing.**
**Floridusgasse 2-10**
**A-1210 Wien (AT)**

## (54) Bohrervermessung.

(57) Es wird ein Verfahren beschrieben zur bestimmung des Achsverlaufes, insbesondere der Biegung eines langgestreckten, vorzugsweise runden oder zentrisch symmetrischen Gegenstandes wie z.B. Stäbe, Wellen, Bohrer, und dgl.

Der Körper wird dabei in eine Spannvorrichtung, vorzugsweise das Spannfutter einer Drehmaschine eingespannt und an der Einspannstelle und anderen Punkten der Stabachse (z-Achse) vermessen. Aus den mit einer Meßuhr gemessenen Parametern werden die dazugehörigen x,y- Koordinaten der Stabachse und die Schiefheit bzw. die Biegung der Achse analytisch bestimmt, die ein Maß für die Akzeptanz bei der Qualitätssicherung darstellen.

EP 0 454 656 A2

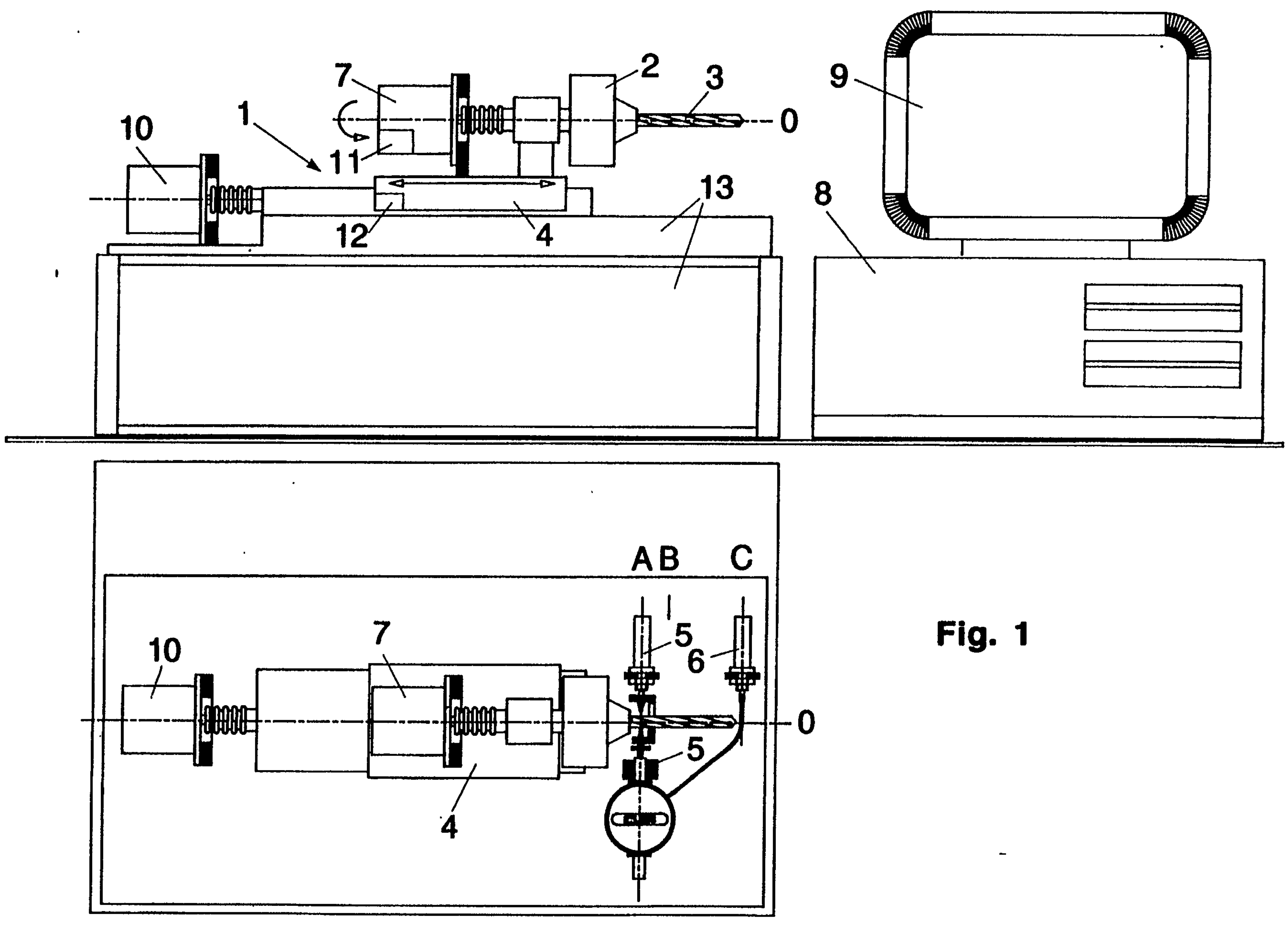


Fig. 1

Die Erfindung betrifft ein Verfahren zur Bestimmung des Achsenverlaufes, insbesondere der Achsbiegung eines langgestreckten, vorzugsweise runden oder zentrisch symmetrischen Gegenstandes bzw. Körpers, z.B. eines Stabes, einer Welle, eines Bohrers od.dgl., welcher Gegenstand bzw. Körper in eine Spanneinrichtung, vorzugsweise das Spannfutter einer Drehmaschine, eingespannt wird. Ferner betrifft die Erfindung eine Anordnung zur Bestimmung des Achsenverlaufes, insbesondere der Achsbiegung eines langgestreckten Gegenstandes bzw. Körpers, z.B. eines Stabes, einer Welle, eines Bohrers od.dgl., wobei zur Einspannung des Körpers ein Spannbacken (Futter), z.B. das Futter einer Drehmaschine, vorgesehen ist.

Aufgabe der Erfindung ist die Bestimmung der Achsabweichung von langgestreckten Bauteilen bzw. Körpern, insbesondere der Feststellung, ob ein Körper bzw. seine Achse über einen gewissen Betrag seiner bzw. ihrer Länge eine unzulässige Abweichung gegenüber ihrem eigenen anfänglichen Verlauf oder gegenüber eine vorbestimmte Achse aufweist bzw. eine unzulässige Biegung besitzt. Insbesondere soll ein vollautomatisch ablaufendes Verfahren erstellt werden, mit dem zylindrische Bauteile, wie sie z.B. auf Drehbänken erzeugt werden können, automatisch vermessen und nicht entsprechende Bauteile ausgesondert werden können.

Ein Verfahren der eingangs genannten Art ist erfindungsgemäß dadurch gekennzeichnet, daß in einer der Einspannstelle nahen ersten Meßebene der Versatzvektor der Körperachse (bzw.des Querschnittmittelpunktes des Körpers) in Bezug auf die Achse der Spanneinrichtung bestimmt wird, daß in einer zweiten, im Abstand zur ersten gelegenen Meßebene nochmals der Versatzvektor der Körperachse in Bezug auf die Achse bzw. der Durchstoßpunkt der Körperachse mit der zweiten Meßebene bestimmt wird, daß durch Verbindung des auf der Achse in der ersten Meßebene gelegenen Achspunktes mit den beiden Versatz- bzw. Durchstoßpunkten der Körperachse in der ersten und der zweiten Meßebene und entsprechender Bildung der Vektordifferenz dieser Vektoren die durch die Richtung dieses Vektors bestimmte Richtung der Körperachse ermittelt wird, daß in zumindest einer weiteren Meßebene der Versatz der Körperachse bzw. ein weiterer Durchstoßpunkt der Körperachse mit dieser Meßebene bestimmt wird, daß zur Bestimmung des Versatzes bzw. Versatzvektors in der ersten und gegebenenfalls auch in der zweiten und der (den) weiteren Meßebene(n) der (Normal)Abstand eines Meßpunktes auf der Körperoberfläche von einem bezüglich des Gegenstandes ortsinvarianten Bezugsnullpunkt bzw. dem Ausgangsmeßpunkt des eingesetzten Meßgerätes jeweils für einander diametral am Körper gegenüberliegende Meßstellen jeweils in zwei senkrecht zueinander stehenden Ebenen durch die Körperachse ermittelt wird, indem die halbe Differenz der an gegenüberliegenden Meßpunkten ermittelten Meßwertes des (Normal)Abstandes vom Bezugsnullpunkt als Versatz der Körperachse in Bezug auf die Achse errechnet wird, daß der Vektor vom Achspunkt auf der Achse der Spanneinrichtung zum weiteren Durchstoßpunkt ermittelt wird, daß von diesem Vektor der in der ersten Meßstelle ermittelte Versatzvektor und der vom ersten Durchstoßpunkt über den zweiten Durchstoßpunkt bis in die weitere Meßebene verlängerte Vektor subtrahiert wird, und daß dieser ermittelte Differenzvektor als Abweichung der Körperachse in der weiteren Meßebene von dem durch die Richtung des Vektors gegebenen Verlauf der Körperachse ermittelt und als Maß für die Beurteilung einer zulässigen Achsabweichung bzw. Biegung des Körpers herangezogen bzw. ausgewertet wird. Vorteilhaft ist dabei, wenn zur Bestimmung des Versatzes bzw. Versatzvektors in der ersten Meßebene und gegebenenfalls auch in der zweiten und weiteren Meßebene der (Normal)Abstand eines Meßpunktes auf der Körperoberfläche von einem Bezugsnullpunkt bzw. von dem eingesetzten Meßgerät jeweils für einander diametral am Körper gegenüberliegende Meßstellen jeweils in zwei senkrecht zueinander stehenden Ebenen durch die Körperachse ermittelt wird, indem die halbe Differenz der an gegenüberliegenden Meßpunkten ermittelten Meßwerte als Versatz der Körperachse in Bezug auf die Achse errechnet wird.

Eine Anordnung der eingangs genannten Art ist erfindungsgemäß dadurch gekennzeichnet, daß zumindest ein Abstandsmeßgerät, z.B. eine Meßuhr, ein optischer, hydraulischer oder elektrischer Abstandsmesser od.dgl., zur Ermittlung des (Normal)Abstandes eines Bezugsnullpunktes oder Ausgangsmeßpunktes des Abstandmeßgerätes von jeweils einem, vorzugsweise jeweils zwei in senkrechten Ebenen liegenden Meßpunkte(n) auf der Oberfläche des Gegenstandes vorgesehen ist, wobei der Körper und/oder die Abstandsmeßeinrichtung(en) um den Körper verdrehbar ist(sind) oder in Längsrichtung des Körpers relativ zueinander bewegbar angeordnet sind, daß eine Winkelmeßeinrichtung für die Bestimmung des Winkels der Relativverdrehung des Abstandmeßgerätes gegenüber dem Körper zur Ermittlung von senkrecht zueinander stehenden Ebenen, in den Abstandsmessungen erfolgen, vorgesehen ist, daß zumindest eine Wegmeßeinrichtung zur Bestimmung des Abstandes zwischen mehreren Meßebenen längs des Körpers vorgesehen ist, und daß das zumindest eine Abstandsmeßgerät und gegebenenfalls die Winkelmeßeinrichtung und gegebenenfalls die Wegmeßeinrichtung zur Auswertung der von ihnen abgegebenen Meßsignale an eine gegebenenfalls eine Anzeigeeinrichtung umfassende Auswerteeinrichtung angeschlossen sind.

Weitere vorteilhafte Ausführungsformen der Erfindung bzw. vorteilhafte Ausgestaltungen des erfindungsgemäßen Verfahrens sind der weiteren Beschreibung, den Patentansprüchen und der Zeichnung zu entnehmen.

Im folgenden wird nunmehr die Erfindung anhand der Zeichnung näher erläutert. Es zeigen Fig.1 eine erfindungsgemäße Anordnung schematisch im Schnitt bzw. Draufsicht, Fig.2 einen Schnitt längs der Linie A-A in Fig.1 und Fig.3 eine schematische Ansicht der Meßebenen.

Fig.1 zeigt eine Drehmaschine 1, die im vorliegenden Fall als Einrichtung zur Durchführung des erfindungsgemäßen Verfahrens eingesetzt wird. Der Einsatz von Drehmaschinen ist vorteilhaft, weil diese die erforderlichen Meßeinrichtungen zum Teil bereits integriert besitzen und einfach adaptierbar sind. Alternativ können natürlich auch anders aufgebaute Einrichtungen eingesetzt werden. In das Spannfutter 2 mit einer Drehachse 0 einer Präzisionsspindel der Drehmaschine 1 ist ein zu überprüfender Körper 3 eingesetzt. Der Schlitten bzw. Tisch 4 der Drehmaschine 1 ist längsverfahrbar; der von ihm zurückgelegte Weg ist mit einer Wegmeßeinrichtung 12 meßbar. Zur Messung der Winkeldrehung des Spannfutters 2 ist eine Meßeinrichtung 11 vorhanden. Der Antrieb des Schlittens 4 bzw. des Spannfutters 2 erfolgt mit Schrittmotoren 7,10.

Wie in Fig.1 unten in Draufsicht zu ersehen ist, sind ortsfeste Meßeinrichtungen 5 und gegebenenfalls 6 vorgesehen, welche den (Normal)Abstand zur Oberfläche des Körpers 3 messen. Der Abstand hängt dabei von der Lage der Körperachse relativ zum Meßgerät bzw. relativ zur Achse 0 der Spanneinrichtung ab, da die Meßgeräte 5,6 bezüglich ihres Abstandes $h_o$ von der Achse 0 der Spanneinrichtung 2 genau vermessen sind. Zur Durchführung des erfindungsgemäßen Verfahrens wird der Normalabstand in Meßebenen A,B und C vermessen, wozu eine entsprechende Anzahl von Meßeinbrichtungen 5,6 längs der Drehachse 0 der Präzisionsspindel 2 in verschiedenen genau vermessenen Abständen versetzt angeordnet wird und/oder auch nur eine feststehende Meßeinrichtung 5 vorgesehen werden muß, gegenüber der der Körper 3 mit dem Tisch 4 verfahren und in entsprechenden Stellungen angehalten wird.

Die Meßeinrichtungen 5,6 können elektronische Meßuhren, Laserentfernungsmeßeinrichtungen, pneumatisch arbeitende Abstandsmeßeinrichtungen, optische Entfernungsmesser od.dgl. sein.

Mit den Meßeinrichtungen 5 bzw. 6 wird in jeder Meßebene A,B,C die Körperoberfläche in zwei zueinander senkrechten Ebenen vermessen. Dazu werden entweder die Meßeinrichtungen 5,6 um den Körper 3 rotiert oder es erfolgt eine Rotation des Körpers 3, z.B. mit dem Schrittmotor 7 der Drehmaschine 1. Dem Schrittmotor ist die Winkelmeßeinrichtung 11 zugeordnet bzw. wird er von dieser gesteuert, um die entsprechenden Verdrehungen des Körpers 3 mit höchstmöglicher Präzision durchführen zu können. Soferne die Meßeinrichtungen 5,6 relativ zum Körper mit eigenen Verstelleinrichtungen (nicht dargestellt) bewegt (Rotation und/oder Längsbewegung) werden, wird die Relativbewegung der Meßeinrichtungen 5,6 gegenüber dem Körper 3 möglichst genau gemessen.

Die gemessenen Signale werden zur Auswertung einer Auswerteeinrichtung 8, vorzugsweise einem Rechner, zugeführt, die gemäß einem speziellen Auswerteverfahren arbeitet und eine Anzeigeeinrichtung 9 besitzt, auf der die Meßwerte und/oder der Verlauf der Achse des vermessenen Körpers 3 angezeigt werden kann.

Vor der Messung wird der Abstand des Bezugsnullpunktes bzw. der Abstand des bzw. der Meßgeräte 5,6 von der Drehachse 0 des Spannfutters 2 ermittelt. Für diesen Kalibriervorgang wird in der Spindel 2 ein hochpräzis geschliffenes Rundmaterial mit bekanntem Durchmesser d eingespannt. Vorteilhafterweise wird dabei die Achse des Rundmaterials mit der Drehachse 0 in Deckung gebracht, so daß bei Einsatz von mehreren Meßgeräten bzw. gegenüber den um die Körperachse KA um 90° versetzten Meßgeräten sämtliche Bezugsnullpunkte auf einen gleichen Wert eingeregelt bzw. abgestimmt werden können. Bei nur einem Meßgerät 5 wird nur ein Abstand $h_o$ von der Drehachse 0 festgestellt.

Zur Vermessung des Körpers 3 werden nunmehr nahe der Einspannstelle die Abstände $h_1,h_2,h_3,h_4$ von vier Meßstellen $P_1,P_2,P_3,P_4$ auf der Körperöberfläche zu dem oder den Meßgerät(en) 5 bestimmt (Fig.2). Diese Meßstellen $P_1,P_2,P_3,P_4$ liegen in der Meßebene A (Fig.l), die senkrecht zur Drehachse 0 verläuft, jeweils um 90° zueinander versetzt. Der Körper 3 wird ausgehend von einer vorgegebenen Nullposition der Spindel bzw. Einspannvorrichtung 2 aus in vier Schritten jeweils um 90°, insgesamt also um 360°, gedreht und nach jedem Schritt wird der (Normal)Abstand vermessen. Mit dieser Messung wird die Lage bzw. der Versatz der Körperachse KA in bezug auf die Achse 0 bestimmt, welcher Versatz in der Meßebene A den Betrag $x_0$ und $y_0$ besitzt und den Vektor $b_o$ bestimmt (Fig.3).

Dieser Versatzvektor $b_o$ gibt z.b. bei einem Bohrer die Abweichung des Bohrerquerschnittskreismittelpunktes von der Drehachse 0 der Einspannvorrichtung 2 an. Er entsteht durch eine nicht zentrische Einspannung des Bohrers, die durch diese vier Messungen mit dem Meßgerät 5 genau bestimmt werden kann. Im Schnitt A-A gemäß Fig.2 entsprechend der Meßebene A wurde ein mit dem Spannfutter 2 mitdrehendes bzw. mitbewegtes kartesisches Koordinatensystem angenommen. Die z-Achse liegt in der Achse 0 und steht normal auf die Schnittebene A-A bzw. die Meßebene A im Schnittpunkt der x-Achse und der y-Achse. Die x- und y-Achsen entsprechen hier den Richtungen der Abstandsmessung, z.B. den Bewegungsrichtungen des Meßfühlers einer eingesetzten Meßuhr. Liegt die Meßrichtung nicht in den Achsen, so kann dies durch eine einfache Umrechnung bzw. Transformation ausgeglichen werden.

In der ersten Meßstellung wird von der Abstandsmeßeinrichtung 5 der (Normal)Abstand vom Bezugsnullpunkt BN der Meßeinrichtung 5 bis zur Oberfläche des Körpers 3, im vorliegenden Fall ein Bohrer, als Weg $h_1$

gemessen, welche Stellung der Einspannvorrichtung als Winkel-Nullposition betrachtet wird. Wenn daraufhin der Körper 3 und/oder die Meßeinrichtung 5 um 90° relativ zueinander verdreht werden, wird ein weiterer Abstandswert $h_2$ oder $h_4$ gemessen usw. bis nach einer Realtivverdrehung um 270° die Meßwerte $h_1, h_2, h_3$ und $h_4$ vorliegen. Es ergeben sich dadurch folgende Zusammenhänge:

$$h_1 = h_0 - \frac{d'}{2} - y_0 \qquad (1.1)$$

$$h_2 = h_0 - \frac{d''}{2} + x_0 \qquad (1.2)$$

$$h_3 = h_0 - \frac{d'}{2} + y_0 \qquad (1.3)$$

$$h_4 = h_0 - \frac{d''}{2} - x_0 \qquad (1.4)$$

Der Versatz in x-Richtung ($x_0$) und in y-Richtung ($y_0$) läßt sich wie folgt berechnen:

$$x_0 = \frac{h_2 - h_4}{2} \qquad (1.5)$$

$$y_0 = \frac{h_3 - h_1}{2} \qquad (1.6)$$

Damit ist die Lageabweichung bzw. der Versatz $b_o$ der Körperachse KA relativ zur Drehachse 0 der Spannvorrichtung in diese Meßebene A festgelegt und berechnet.

Als weitere notwendige Ermittlung erfolgt die Bestimmung der Richtung der Körperachse KA des eingespannten Körpers 3. Dazu wird in einer um einen gewissen Abstand, in der Praxis z.B. 10 mm, versetzten Meßebene B eine weitere Messung der (Normal)Abstände $h_1$, $h_2$, $h_3$, $h_4$ vorgenommen. Dabei wird der Durchstoßpunkt der Achse 0 in der meßebene A als Ursprung der z-Achse des Koordinatensystems betrachtet. Der Verlauf der Körperachse KA kann somit aus einer Bestimmung der Durchstoßpunkte $D_1$ und $D_2$ der Achse KA in der Meßebene A und der Meßebene B bestimmt werden,wobei die Durchstoßpunkte $D_1$,$D_2$ durch Messung des jeweiligen Versatzes $b_o$ bzw. b' in den Meßebenen A,B bestimmt werden. Es ergibt sich dabei folgende Vektorgleichung:

$$\vec{b} = \vec{b}_1 - \vec{b}_0 = \begin{pmatrix} x_1 \\ y_1 \\ 10 \end{pmatrix} - \begin{pmatrix} x_0 \\ y_0 \\ 0 \end{pmatrix} \qquad (2.1)$$

wobei $x_o$, $y_o$ die Koordinaten des Versatztes bzw. der in der ersten Meßebene A ermittelte Versatzvektor $b_o$, und $x_1$, $y_1$ die Koordinaten des in der Meßebene B ermittelten Versatzes b' der Bohrerachse KA sind; der Vektor $b_1$ mit den Koordinaten ($x_1$, $y_1$, 10) geht vom Ursprung x aus und führt zum Durchstoßpunkt $D_2$ der Bohrerachse KA mit der Ebene B. Durch Vektorsubtraktion erhält man die Richtung der Bohrerachse KA, die vom Durchstoßpunkt $D_1$ zum Durchstoßpunkt $D_2$ verläuft.

Wenn man weitere derartige Messungen, wie sie in der Meßebene B vorgenommen wurden, über die Länge des Bohrers ausführen würde, ist bei völlig gerader Bohrerachse KA zu erwarten, daß die weiteren für die Körperachse KA ermittelten Durchstoßpunkte in den jeweiligen Meßebenen immer auf einer Geraden liegen. Soferne die Durchstoßpunkte in den gewählten Meßebenen jedoch von dieser Geraden, die in ihrer Richtung durch die Richtung des Vektors b gegeben ist, abweicht, entspricht dies einer Biegung der Körperachse 3. Um nun einen derartigen "Biegungsversatz" zu bestimmen, wird zumindest eine weitere Messung an einer Stelle C des Körpers 3 vorgenommen und der Versatz b" bzw. der Durchstoßpunkt $D_3$ in dieser Meßebene C in beschriebener Weise gemessen bzw. berechnet. Es ergibt sich dabei folgende Vektorgleichung:

$$\vec{b}_v = \vec{b}(z) - \frac{z\,\vec{b}}{b_z} - \vec{b}_0 \qquad (3.1)$$

Dabei ist $b_z$ die z-Komponente des Vektors b, die Vektoren $b_o$ und b sind bereits definiert und der Vektor b(z) ergibt sich aus der Messung des Versatzes b" an der position C. Dieser Zusammenhang ist aus Fig.3 ersichtlich. Man erkennt, daß die Bohrerachse KA durch die Messungen in den Meßebenen A und B in ihrer Richtung bestimmt ist. Ergibt sich nunmehr bei einer Messung in der Ebene C, daß die Körperachse KA durch den punkt $D_3$ verläuft, so verläuft der strichpunktierte Vektor b(z) vom Ursprung X der Drehachse 0 bis zum punkt $D_3$. Wird nun die Summe aus dem Vektor b, der bis in die Ebene C durch Normierung (z/bz).b verlängert ist, und dem Vektor $b_o$ von b(z) subtrahiert, erhält man den Bohrerversatz $b_v$, welcher ein Merkmal für eine Biegung der Körperachse KA ist. Eine mögliche Biegung BG ist strichliert in Fig.3 eingezeichnet.

Zur Verdeutlichung wurde das Beispiel für konstante x-Kordinaten erläutert, d.h. die Achse 0 und die Körperachse KA verlaufen in der y-z-Ebene; dies muß in der praxis keineswegs der Fall sein; die Achsen können beliebig windschief verlaufen oder einander auch schneiden.

Wenn der Wert für $h_o$ bekannt ist, so kann auch durch entsprechende Messung der Durchmesser d des Körpers 3 berechnet werden. die folgenden Formeln können direkt aus der Fig.2 abgeleitet werden.

$$\left(\frac{d}{2}\right)^2 = \left(\frac{d''}{2}\right)^2 + y_0^2 \qquad (4.1a)$$

$$\left(\frac{d}{2}\right)^2 = \left(\frac{d'}{2}\right)^2 + x_0^2 \qquad (4.1b)$$

$$2\,h_0 = h_1 + h_3 + d' \qquad (4.2a)$$

$$2\,h_0 = h_2 + h_4 + d'' \qquad (4.2a)$$

Durch Einsetzen von (4.1) in (4.2) kann $h_o$ berechnet werden, wenn der Durchmesser (d) bekannt ist. Es ergibt sich somit folgender Zusammenhang:

$$h_0 = \frac{1}{2}\left(h_2 + h_4\right) + \sqrt{\left(\frac{d}{2}\right)^2 - y_0^2} \qquad (4.3a)$$

$$h_0 = \frac{1}{2}\left(h_1 + h_3\right) + \sqrt{\left(\frac{d}{2}\right)^2 - x_0^2} \qquad (4.3b)$$

Aus diesen beiden Gleichungen kann man wahlweise d oder $h_o$ ausrechnen, je nachdem, welcher Wert bereits bekannt ist.

Es ist ferner möglich, den Bohrerdurchmesser d nach der erfolgten Kalibriermessung aus der Gleichung (4.3) zu berechnen, gemäß den Formeln:

$$d = \sqrt{y_0^2/4 + (h_2 + h_4 - 2\,h_0)^2} \qquad (5.1a)$$

$$d = \sqrt{x_0^2/4 + (h_1 + h_3 - 2\,h_0)^2} \qquad (5.1b)$$

Je nach der Größe des Versatzes $b_v$ kann nunmehr eine Qualitätsbestimmung für den Körper 3 vorgenommen werden und durch entsprechende Einrichtungen für eine Entfernung von nicht entsprechenden Gegenständen 3 aus einer Fertigungsstrecke gesorgt werden.

Da unter Umständen die Messung an einer Stelle C nicht unbedingt bei der gleichen Winkellage des Körpers 3 erfolgen kann wie die Messung in der Ebene A und/oder B, kann die übliche rechnerische Koordinatenverdrehung vorgenommen werden bzw. die Vektorkomponenten werden entsprechend der Verdrehung der Koordinaten an der Meßstelle gegenüber den Ursprungskoordinaten zurückgedreht, und zwar z.B. gemäß der folgenden Vektordrehung:

$$\vec{b}(z) = \begin{bmatrix} x_0 \cos(\varphi) + y_0 \sin(\varphi) \\ y_0 \cos(\varphi) - x_0 \sin(\varphi) \\ z \end{bmatrix} \qquad (3.2)$$

Wenn es sich ergibt, daß der Körper 3 seinen Durchmesser über die Länge ändert und die Messungen in den Meßebenen C an einem anderen Durchmesser des Körpers 3 vorgenommen werden müssen, so spielt dies keine Rolle, da zur Ermittlung des Versatzes b" in der Meßebene C bzw. des Versatzes b' in der Meßebene B der Durchmesser des Körpers 3 nicht in die Rechnung eingeht. Voraussetzung ist es jedoch, daß der Körper möglichst exakt rund oder zentrisch symmetrisch ist. Es ist somit möglich, bei Bohrern Kern- und Rückenmessungen, ohne wesentliche Abänderungen des Meßprinzips durchzuführen.

## Patentansprüche

1. Verfahren zur Bestimmung des Achsenverlaufes, insbesondere der Achsbiegung eines langgestreckten, vorzugsweise runden oder zentrisch symmetrischen Gegenstandes bzw. Körpers, z.B. eines Stabes, einer Welle, eines Bohrers od.dgl., welcher Gegenstand bzw. Körper in eine Spanneinrichtung, vorzugsweise das Spannfutter einer Drehmaschine, eingespannt wird, dadurch gekennzeichnet, daß in einer der Einspannstelle nahen ersten Meßebene (A) der Versatzvektor ($b_o$) der Körperachse (A) (bzw.des Querschnittsmittelpunktes des Körpers) in Bezug auf die Achse (0) der Spanneinrichtung bestimmt wird, daß in einer zweiten, im Abstand zur ersten gelegenen Meßebene (B) nochmals der Versatzvektor (b') der Körperachse (KA) in Bezug auf die Achse (0) bzw. der Durchstoßpunkt ($D_2$) der Körperachse (KA) mit der zweiten Meßebene (B) bestimmt wird, daß durch Verbindung des auf der Achse (0) in der ersten Meßebene (A) gelegenen Achspunktes (X) mit den beiden Versatz- bzw. Durchstoßpunkten ($D_1$,$D_2$) der Körperachse (KA) in der ersten und der zweiten Meßebene (A,B) und entsprechender Bildung der Vektordifferenz (b) dieser Vektoren die durch die Richtung dieses Vektors (b) bestimmte Richtung der Körperachse (KA) ermittelt wird, daß in zumindest einer weiteren Meßebene (C) der Versatz (b") der Körperachse bzw. ein weiterer Durchstoßpunkt ($D_3$) der Körperachse (KA) mit dieser Meßebene (C) bestimmt wird, daß zur Bestimmung des Versatzes bzw. Versatzvektors ($b_o$,b',b") in der ersten (A) und gegebenenfalls auch in der zweiten (B) und der (den) weiteren (C) Meßebene(n) der (Normal)Abstand ($h_1$, $h_2$, $h_3$, $h_4$) eines Meßpunktes ($P_1$,$P_2$,$P_3$ ,$P_4$) auf der Körperoberfläche von einem bezüglich des Gegenstandes ortsinvarianten Bezugsnullpunkt bzw. dem Ausgangsmeßpunkt des eingesetzten Meßgerätes jeweils für einander diametral am Körper gegenüberliegende Meßstellen jeweils in zwei senkrecht zueinander stehenden Ebenen durch die Körperachse (KA) ermittelt wird, indem die halbe Differenz der an gegenüberliegenden Meßpunkten ($P_1$-$P_3$, $P_2$-$P_4$) ermittelten Meßwertes des (Normal)Abstandes ($h_1$, $h_2$, $h_3$, $h_4$) vom Bezugsnullpunkt als Versatz der Körperachse (KA) in Bezug auf die Achse (0) errechnet wird, daß der Vektor (b(z)) vom Achspunkt (X) auf der Achse (0) der Spanneinrichtung zum weiteren Durchstoßpunkt ($D_3$) ermittelt wird, daß von diesem Vektor (b(z)) der in der ersten Meßstelle ermittelte Versatzvektor ($b_o$) und der vom ersten Durchstoßpunkt ($D_1$) über den zweiten Durchstoßpunkt ($D_2$) bis in die weitere Meßebene (C) verlängerte Vektor (b) subtrahiert wird, und daß der so ermittelte Differenzvektor ($b_v$) die Abweichung der Körperachse (KA) in der weiteren Meßebene (C) von dem durch die Richtung des Vektors (b) gegebenen Verlauf der Körperachse (KA) darstellt und als Maß für die Beurteilung einer zulässigen Achsabweichung bzw. Biegung des Körper herangezogen bzw. ausgewertet wird.

2. Verfahren nach Anspruch 1, dadurch gekennzeichnet, daß im Zuge der Messung in der zweiten (B) und weiteren (C) Meßebene der (Normal)Abstand eines Meßpunktes der Körperoberfläche von dem Bezugsnullpunkt (BN) nur jeweils in zwei zueinander senkrechten Ebenen (x,y) ermittelt wird.

3. Verfahren nach Anspruch 1 oder 2, dadurch gekennzeichnet, daß die zueinander senkrechten Ebenen durch die Achse (0), in denen die (Normal)Abstände ($h_1$, $h_2$, $h_3$, $h_4$) ermittelt werden, in der ersten Meßebene (A) und die weiteren zueinander senkrechten Ebenen durch die Achse (0) in denen die (Normal)Abstände ($h_1$, $h_2$, $h_3$, $h_4$,) in der zweiten (B) und/oder weiteren (C) Meßebene ermittelt werden, übereinstimmen oder im Zuge der Auswertung durch eine Drehung des jeweiligen Bezugskoordinatensystems rechnerisch zur Übereinstimmung gebracht werden.

4. Verfahren nach einem der Ansprüche 1 bis 3, dadurch gekennzeichnet, daß zur aufeinanderfolgenden Messung der (Normal)Abstände der Meßpunkte ($P_1$,$P_2$,$P_3$,$P_4$,) am Körper vom Ausgangsmeßpunkt des eingesetzten Abstandsmeßgerätes bzw. vom Bezugsnullpunkt (BN) der Körper um seine Achse (0) und-/oder das Meßgerät um den Körper rotiert bzw. relativ zueinander parallel zur Achse (0) der Spanneinrichtung bewegt werden, wobei vorzugsweise der Körper vor dem Abstandsmeßgerät vorbeirotiert bzw. vorbeibewegt wird.

5. Verfahren nach einem der Ansprüche 1 bis 4, dadurch gekennzeichnet, daß der (Normal)Abstand des Bezugsnullpunktes (BN) von der Achse (0) der Spannvorrichtung durch Ermittlung des Abstandes des Bezugsnullpunktes (BN) von einem in die Spannvorrichtung eingesetzten runden Stab mit kalibriertem, vorzugsweise über seine Länge gleichbleibenden Durchmesser bestimmt wird, wobei vorzugsweise vor der Messung die genau gerade verlaufende Stabachse mit der Achse (0) übereingestimmt wird.

6. Verfahren nach einem der Ansprüche 1 bis 5, dadurch gekennzeichnet, daß bei Einsatz von eigenen Abstandsmeßgeräten in den einzelnen Meßebenen (A,B,C) der Bezugsnull(Normal)-abstand jedes Meßgerät von der Achse (0) der Spanneinrichtung bestimmt wird.

7. Anordnung zur Bestimmung des Achsenverlaufes, insbesondere der Achsbiegung eines langgestreckten Gegenstandes bzw. Körpers, z.B. eines Stabes, einer Welle, eines Bohrers od.dgl., wobei zur Einspannung des Körpers ein Spannbacken (Futter), z.B. das Futter einer Drehmaschine (1), vorgesehen ist, zur Durchführung des Verfahrens nach einem der Ansprüche 1 bis 6, dadurch gekennzeichnet, daß zumindest ein Abstandsmeßgerät (5,6), z.B. eine Meßuhr, ein optischer, hydraulischer oder elektrischer Abstandsmesser od.dgl., zur Ermittlung des (Normal)Abstandes ($h_1$, $h_2$, $h_3$, $h_4$) eines Bezugsnullpunktes (BN) oder Ausgangsmeßpunktes des Abstandmeßgerätes (5,6) von jeweils einem, vorzugsweise jeweils zwei in senkrechten Ebenen liegenden Meßpunkte(en) auf der Oberfläche des Gegenstandes vorgesehen ist, wobei der Körper (3) und/oder die Abstandsmeßeinrichtung(en) (5,6) um den Körper (3) verdrehbar ist (sind) oder in Längsrichtung des Körpers (3) relativ zueinander bewegbar angeordnet sind, daß eine Winkelmeßeinrichtung (11) für die Bestimmung des Winkels der Relativverdrehung des Abstandmeßgerätes (5) gegenüber dem Körper (3) zur Ermittlung von senkrecht zueinander stehenden Ebenen, in denen Abstandsmessungen erfolgen, vorgesehen ist, daß zumindest eine Wegmeßeinrichtung (12) zur Bestimmung des Abstandes zwischen mehreren Meßebenen (A,B,C) längs des Körpers vorgesehen ist, und daß das zumindest eine Abstandsmeßgerät (5,6) und gegebenenfalls die Winkelmeßeinrichtung (11) und gegebenenfalls die Wegmeßeinrichtung (12) zur Auswertung der von ihnen abgegebenen Meßsignale an eine gegebenenfalls eine Anzeigeeinrichtung (9) umfassende Auswerteeinrichtung (8) angeschlossen sind.

8. Anordnung nach Anspruch 7, dadurch gekennzeichnet, daß von der Auswerteeinrichtung (8) eine Transporteinrichtung für die Weitergabe bzw. Absonderung untersuchter Gegenstände (3) in Abhängigkeit vom Ergebnis der ausgewerteten Meßsignale gesteuert ist.

9. Anordnung nach Anspruch 7 oder 8, dadurch gekennzeichnet, daß eine Verstelleinrichtung zur Verstellung des Meßgerätes (5,6) längs und/oder rund um die Achse (0) der Spanneinrichtung vorgesehen ist.

10. Anordnung nach einem der Ansprüche 7 bis 9, dadurch gekennzeichnet, daß die Spanneinrichtung (2) vom Drehfutter einer an sich bekannten Drehmaschine gebildet ist und um ihre Achse rotierbar auf dem Schlitten (4) der Drehmaschine (1) angeordnet ist, der relativ zu einer insbesondere am Drehmaschinengestell (13) feststehenden Abstandsmeßeinrichtung (5) in Längsrichtung der Achse (0) der Spanneinrichtung (2) verfahrbar ist.

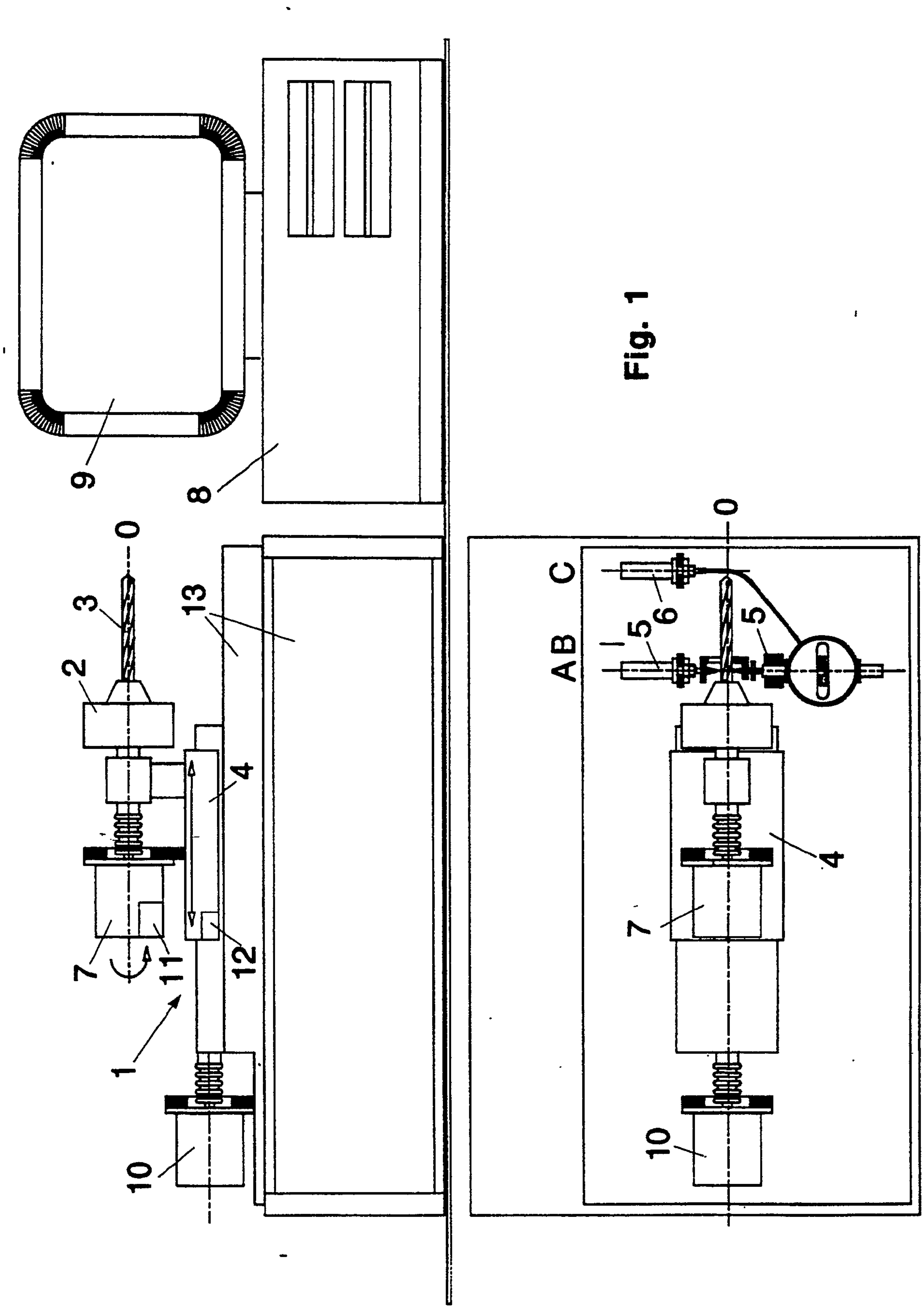


Fig. 1

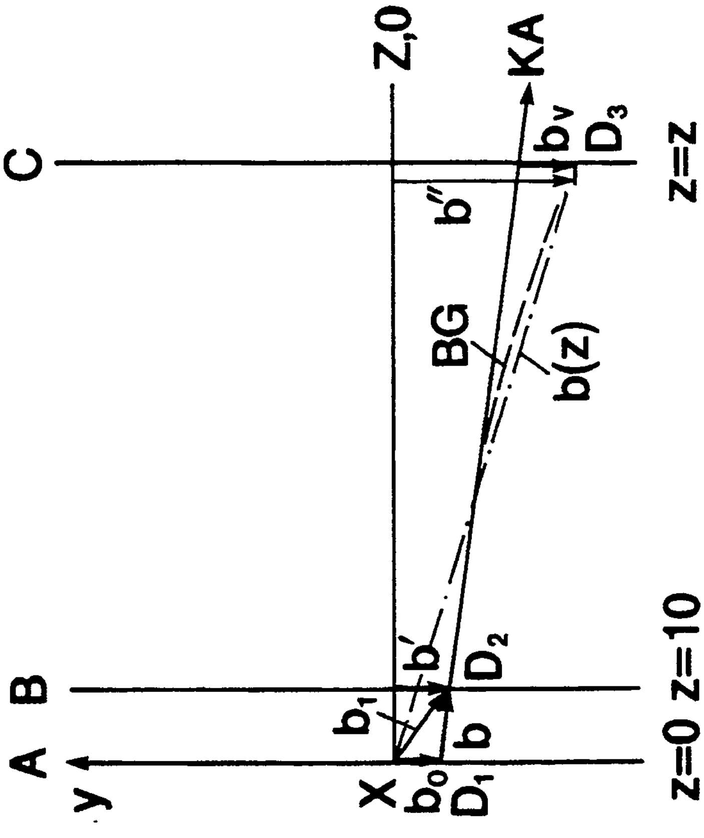


**Fig. 3**

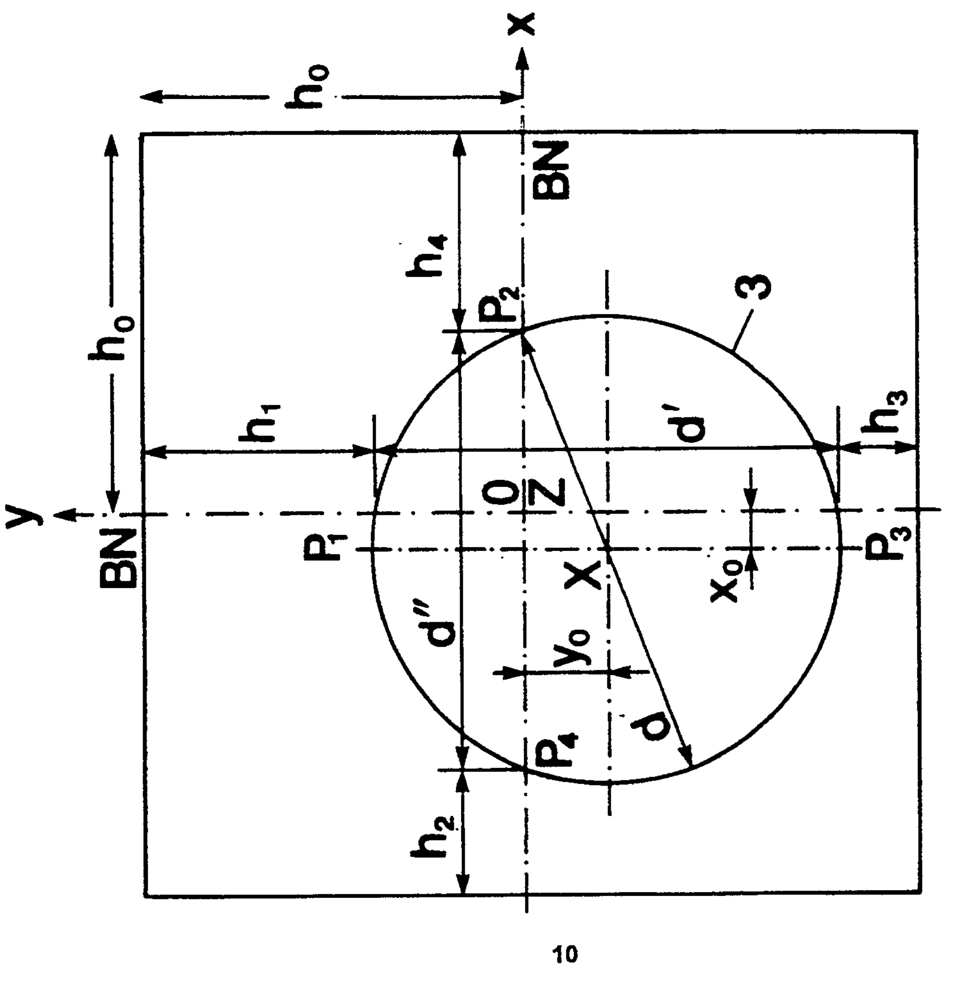


Schnitt A - A

**Fig. 2**